# EUROPEAN PATENT APPLICATION

(11) **EP 4 737 216 A1**
(43) Date of publication of application: **06.05.2026**
(21) Application number: 24210761.3
(22) Date of filing: 05.11.2024
(51) Int. Cl.: B60Q 1/40

(54) **AUTOMATIC TURN SIGNAL CANCELLATION FOR VEHICLE LANE CHANGES BASED ON MONITORED VEHICLE POSITION IN DRIVING LANES**

(71) Applicant: Volvo Truck Corporation, 405 08 Göteborg (SE)
(72) Inventor: DE BRITO, David, CHARVIEU CHAVAGNEUX (FR); BARRELLON, Remi, SIMANDRES (FR); GONZALEZ MOSQUERA, Oriana, VILLEURBANNE (FR)
(74) Representative: Ström & Gulliksson AB

(57) **Abstract**

Automatic turn signal cancellation for vehicle lane changes based on monitored vehicle position in driving lanes. The automatic turn signal cancellation system includes a computer system configured to cancel turn signaling for completed vehicle lane changes based on rate of change of vehicle position from a current driving lane (302) to a new driving lane (304) (i.e., lane change rate 524) using monitoring vehicle position relative to driving lanes. The automatic turn signal cancellation system determines start of vehicle lane change rate (524) based on monitoring vehicle position relative to the current driving lane (302). The automatic turn signal cancellation system then determines vehicle lane change rate (524) to the new driving lane (304) based on monitoring vehicle position relative to the new driving lane (304). As the lane change is completed, the lane change rate (524) to the new driving lane stabilizes, which is then used to detect lane change completion to cancel turn signaling.

## Description

### TECHNICAL FIELD

The disclosure relates generally to turn signal operation in vehicles. In particular aspects, the disclosure relates to a dynamically-controlled automatic turn signal cancellation in a vehicle in response to a lane change completion, including highway lane changes. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A vehicle is equipped with a turn signal indicator that can be activated by a driver to activate turn signaling on the vehicle to provide a visual indication of intention of the driver. The driver can manually cancel a turn signal activation, but the vehicle is also equipped with an automatic turn signal cancellation system configured to automatically cancel previously-activated turn signaling (e.g., activated through a turn signal stalk) in response to detecting a vehicle turn is completed. In response to activation of a turn signal, an automatic turn signal cancellation system can be configured to determine if the turn is completed, to in turn cancel the turn signal based on changes in steering wheel angle. However, it may be difficult for an automatic turn signal cancellation system to distinguish between a normal turn and a lane change for controlling the cancellation of a turn signal. For example, at higher vehicle speeds, the steering wheel angle may not change as significantly in a lane change, such as a highway lane change, as in a normal turn or highway exit. Thus, it may be difficult for an automatic turn signal cancellation system to detect the difference between a normal turn and a highway lane change based on a smaller steering wheel angle change that typically occurs in a highway lane change. However, it is still desired to support automatic turn signal cancellation in response to a driver activating a turn signal for a lane change and then completing the lane change.

### SUMMARY

Exemplary aspects disclosed herein include automatic turn signal cancellation for vehicle lane changes based on monitored vehicle position in driving lanes. A vehicle is equipped with a turn signal indicator that can be activated by a driver (e.g., by activating a turn signal stalk) to activate turn signaling on the vehicle to provide a visual indication of intention of the driver. The driver can manually cancel a turn signal activation. The vehicle is also equipped with an automatic turn signal cancellation system configured to automatically cancel previously activated turn signaling in response to detecting a vehicle turn is completed. In exemplary aspects, the automatic turn signal cancellation system includes a computer system that is configured to cancel turn signaling for completed vehicle lane changes (e.g., highway lane changes) based on the rate of change of the vehicle relative to a current and new driving lane (i.e., lane change rate) by monitoring a position of the vehicle relative to the driving lanes. The automatic turn signal cancellation system determines the vehicle lane change rate based on monitoring the position of the vehicle relative to a new driving lane. As the lane change is completed, the lane change rate to the new driving lane will reduce and become more stable, which can be used as an indication that the lane change is completed to in turn cancel turn signaling for the lane change.

Using a monitored vehicle position to detect a vehicle lane change and its completion is more accurate than using steering wheel angle / wheel angle, for example. This is because rate of change of a steering wheel angle / wheel angle is an indirect method of determining change in vehicle position. Also, steering wheel angle / wheel angle also varies significantly for the exact same lane change rate when a vehicle is moving at a faster speed versus a slower speed, thus making it difficult or not possible to accurately correlate angle change to vehicle position and lane change rate. However, monitoring vehicle position relative to a driving lane is a direct way to determine lane change rate. Thus, monitoring vehicle position relative to a driving lane to determine vehicle lane change rate can be used as a direct and more accurate method of detecting vehicle lane change and its completion. Monitoring vehicle position relative to a driving lane to determine lane change rate for detecting vehicle lane change and its completion may also be safer as well as being more accurate.

In this regard, in an exemplary aspect, for the automatic turn signal cancellation system to detect completion of a vehicle lane change to cancel turn signaling, the automatic turn signal cancellation system is configured to monitor vehicle position relative to a current driving lane. The automatic turn signal cancellation system monitors vehicle position relative to a current driving lane to determine when a lane change starts to occur (e.g., the center of the vehicle crosses the lane marker from the current driving lane to the new driving lane). The start of the vehicle lane change into a new driving lane is detected based on observing a sudden change in the polarity of a monitored vehicle position relative to a current driving lane as compared to a monitored vehicle position relative to a new driving lane. For example, this occurs as a result of a monitored designated area of the vehicle (e.g., center of vehicle) crossing a lane marker line from the current driving lane to the new driving lane if the vehicle distance is monitored as a function of distance to a lane marker line. The automatic turn signal cancellation system then determines an initial vehicle lane change rate over a first period of time after the start of the lane change is detected, because the lane change can be detected as being complete or substantially complete based on the vehicle lane change rate becoming lower and stable relatively.

However, in exemplary aspects, what constitutes the vehicle lane change rate becoming stable is relative to the initial vehicle lane change rate, because a higher lane change rate will result in completion of a lane change faster than a lower lane change rate. In this option, the automatic turn signal cancellation system is then configured to monitor a continued lane change rate to the new driving lane in a second period of time following the first period of time of the initial lane change rate of the vehicle. The automatic turn signal cancellation system is configured to cancel turn signaling once the continued vehicle lane change rate is low enough relative to the initial vehicle lane change rate, signifying stability of the vehicle in the new driving lane and completion or substantial completion of the lane change.

In exemplary aspects, for the automatic turn signal cancellation system to determine lane change completion relative to an initial lane change rate, the automatic turn signal cancellation system is configured to calculate a lane change rate threshold based on the determined initial lane change rate. A higher threshold value is used for the lane change rate threshold for a higher determined initial lane change rate. A lower threshold value is used for the lane change rate threshold for a lower determined initial lane change rate. The automatic turn signal cancellation system is then configured to continuously sample the continued lane change rate of the vehicle relative to the new driving lane. If the continued vehicle lane change rate is greater than the initial lane change rate threshold during a given sampling period (e.g., every 500 milliseconds (ms)), this means the vehicle position relative to a new driving lane has not yet become stable and thus the lane change to a new driving lane is not yet completed, and turn signaling is not yet canceled. However, if the continued vehicle lane change rate becomes less than the initial lane change rate threshold during a given sampling period, this means the vehicle position relative to the new driving lane has become stable and thus the lane change to the new driving lane is completed or substantially completed, and turn signaling is canceled.

In other exemplary aspects, the automatic turn signal cancellation system is configured to determine vehicle position relative to a driving lane by tracking distance of a designated area of the vehicle (e.g., center of the vehicle) from a lane marker line (e.g., a dashed white or yellow line) of the driving lane. In an example, the automatic turn signal cancellation system is configured to interface with a distance sensor that is configured to provide a distance indicator of a distance between the vehicle and a lane marker in the driving lane of the vehicle. For example, the distance sensor could be a camera that can capture an image of the lane marker line that can be detected as well as the distance to the lane marker line by a processing circuit analyzing the image. In another example, the automatic turn signal cancellation system can be configured to detect vehicle distance relative to a driving lane by detecting distance from the vehicle center to the lane marker line(s) of a driving lane. In another example, the vehicle can be equipped with distance sensors to detect the lane marker line for the driving lane on both left side and right side of the vehicle. A lane change can be detected using detection of vehicle position from either the left or right lane marker line in the driving lane (as distance change of a vehicle relative to a fixed left and right lane marker line in a driving lane will oppositely change linearly), but the automatic turn signal cancellation system may be configured to use the distance from the closest lane marker line for greater accuracy. The ability to provide left and right side distance sensors to detect left side and right side distances of the vehicle to its driving lane also provides redundancy in case of failure of one of the distance sensors.

In this regard, in an example, including in at least one preferred example, an automatic turn signal cancellation system including processing circuitry is disclosed. The processing circuitry is configured to, in response to activation of a turn signal in a vehicle in a current driving lane, monitor a position of the vehicle relative to the current driving lane, detect the vehicle entering into a new driving lane adjacent to the current driving lane based on the monitored position of the vehicle, and, in response to detecting the vehicle entering into the new driving lane, determine a vehicle lane change rate indicating a rate of change in position of the vehicle entering into the new driving lane, and cancel the turn signal based on the vehicle lane change rate of the vehicle entering into the new driving lane. A technical benefit may include that monitoring vehicle position to detect a vehicle lane change and its completion based on vehicle lane change rate is more accurate than using steering wheel angle / wheel angle, because rate of change of a steering wheel angle / wheel angle is an indirect method of determining change in vehicle position.

Optionally in some examples, including in at least one preferred example, the processing circuitry is configured to cancel the turn signal by being configured to cancel the turn signal based on the vehicle lane change rate of the vehicle entering into the new driving lane being below a lane change rate threshold. A technical benefit may include more accurately determining when the vehicle position into a new lane has become stable enough to detect the vehicle lane change has been completed.

Optionally in some examples, including in at least one preferred example, the processing circuitry is further configured to, in response to detecting the vehicle entering into the new driving lane, not cancel the turn signal based on the vehicle lane change rate of the vehicle entering into the new driving lane being above the lane change rate threshold. A technical benefit may include more accurately determining when the vehicle position into a new lane has not become stable enough to determine the vehicle lane change has not been completed, and thus not yet cancel a turn signal.

Optionally in some examples, including in at least one preferred example, the processing circuitry is configured to detect the vehicle entering into the new driving lane by being configured to detect a designated area of the vehicle crossing a lane marker between the current driving lane and the new driving lane based on the monitored position of the vehicle. A technical benefit may include more accurately determining that a vehicle lane change has occurred by the vehicle position crossing a lane marker between driving lanes.

Optionally in some examples, including in at least one preferred example, the processing circuitry is configured to detect the designated area of the vehicle crossing the lane marker between the current driving lane and the new driving lane by being configured to determine a distance between the designated area of the vehicle and the lane marker based on the monitored position of the vehicle, and detect a change between a maximum distance between the designated area of the vehicle and the lane marker and a minimum distance between the designated area of the vehicle and the lane marker. A technical benefit may include the ability to determine if a vehicle lane crossing has occurred.

Optionally in some examples, including in at least one preferred example, the designated area of the vehicle includes a center of the vehicle. A technical benefit may include being able to detect vehicle position with regard to a driving lane independent of which side of the vehicle is monitored to detect a lane marker line.

Optionally in some examples, including in at least one preferred example, in response to detecting the vehicle entering into the new driving lane, the processing circuitry is further configured to determine an initial vehicle lane change rate of the vehicle entering into the new driving lane over a first time period after detecting the vehicle entering the new driving lane, and set the lane change rate threshold based on the determined initial vehicle lane change rate. A technical benefit may include using the initial vehicle lane change rate to determine the aggressiveness or speed of the vehicle lane change to then use such information to be able to more accurately determine when the vehicle position has become stable enough in a driving lane to determine the vehicle lane change has been completed.

Optionally in some examples, including in at least one preferred example, the processing circuitry is further configured to, in response to detecting the vehicle entering into the new driving lane, sample a plurality of second positions of the vehicle relative to the new driving lane over the first time period; and the processing circuity is configured to determine the initial vehicle lane change rate by being configured to determine the initial vehicle lane change rate of the vehicle entering into the new driving lane based on the sampled plurality of second positions of the vehicle over the first time period. A technical benefit may include using the initial vehicle lane change rate to determine the aggressiveness or speed of the vehicle lane change to then use such information to be able to more accurately determine when the vehicle position has become stable enough in a driving lane to determine the vehicle lane change has been completed.

Optionally in some examples, including in at least one preferred example, the processing circuitry is configured to sample the plurality of second positions of the vehicle relative to the new driving lane over the first time period by being configured to sample a plurality of second distances of the vehicle to a lane marker between the current driving lane and the new driving lane over the first time period, and determine the initial vehicle lane change rate of the vehicle by being configured to determine the initial vehicle lane change rate of the vehicle entering into the new driving lane based on a change in the sampled plurality of second distances of the vehicle over the first time period. A technical benefit may include determining position of a vehicle based on distance from the vehicle to a lane marker line to detect a vehicle lane change.

Optionally in some examples, including in at least one preferred example, the processing circuitry is configured to set the lane change rate threshold to 0.4 based on the determined initial vehicle lane change rate being greater than 0.6. A technical benefit may include basing the vehicle lane change rate used to determine a completed vehicle lane change based on the aggressiveness of the initial vehicle lane change rate.

Optionally in some examples, including in at least one preferred example, the processing circuitry is configured to set the lane change rate threshold to 0.2 based on the determined initial vehicle lane change rate being between 0.4 and 0.6. A technical benefit may include basing the vehicle lane change rate used to determine a completed vehicle lane change based on the aggressiveness of the initial vehicle lane change rate.

Optionally in some examples, including in at least one preferred example, the processing circuitry is configured to set the lane change rate threshold to 0.1 based on the determined initial vehicle lane change rate being less than 0.4. A technical benefit may include basing the vehicle lane change rate used to determine a completed vehicle lane change based on the aggressiveness of the initial vehicle lane change rate.

Optionally in some examples, including in at least one preferred example, the processing circuitry is configured to determine the vehicle lane change rate of the vehicle entering into the new driving lane by being configured to sample a plurality of third positions of the vehicle relative to the new driving lane over a second time period following the first time period, and determine the vehicle lane change rate of the vehicle entering into the new driving lane based on the sampled plurality of third positions of the vehicle over the second time period. A technical benefit may include using sampling periods to detect whether the vehicle has become stable in a new driving lane to detect completion of a vehicle lane change.

Optionally in some examples, including in at least one preferred example, the processing circuitry is configured to cancel the turn signal by being configured to cancel the turn signal based on the vehicle lane change rate of the vehicle entering into the new driving lane being below the lane change rate threshold. A technical benefit may include more accurately determining when the vehicle position into a new lane has become stable enough to detect the vehicle lane change has been completed.

Optionally in some examples, including in at least one preferred example, the processing circuitry is configured to set the lane change rate threshold in a positive correlation to the initial vehicle lane change rate. A technical benefit may include basing the vehicle lane change rate used to determine a completed vehicle lane change based on the aggressiveness of the initial vehicle lane change rate.

Optionally in some examples, including in at least one preferred example, the first time period is 500 milliseconds (ms). A technical benefit may include providing a sufficient time to accurately detect an initial lane change rate.

Optionally in some examples, including in at least one preferred example, the processing circuitry is further configured to receive a distance indicator from a distance sensor on the vehicle indicative of distance of a designated area of the vehicle relative to a lane marker line of a driving lane of the vehicle, and monitor the position of the vehicle relative to the current driving lane by being configured to determine the position as a distance of the designated area of the vehicle relative to the current driving lane based on the distance indicator from the distance sensor. A technical benefit may include determining vehicle position based on distance from a lane marker line.

Optionally in some examples, including in at least one preferred example, the distance sensor includes a camera mounted to the vehicle. A technical benefit may include using a vision system to detect vehicle position relative to a lane marker line, and such camera may also be employed in a vehicle for other purposes as well, thus saving hardware costs.

Optionally in some examples, including in at least one preferred example, the processing circuitry is further configured to receive a distance indicator from a left distance sensor on the vehicle indicative of distance of the vehicle relative to a left-side lane marker line of a driving lane of the vehicle, receive a right distance indicator from a right distance sensor on the vehicle indicative of distance of the vehicle relative to a right-side lane marker line of the driving lane of the vehicle and monitor the position of the vehicle relative to the current driving lane by being configured to determine a left distance of the designated area of the vehicle relative to the left-side lane marker line of the current driving lane based on the left distance indicator from the left distance sensor, determine a right distance of the designated area of the vehicle relative to a right-side lane marker line of the current driving lane based on the right distance indicator from the right distance sensor, and determine the position of the vehicle relative to the current driving lane as the closest distance among the left distance and the right distance. A technical benefit may include providing redundancy in distance sensors used to detect vehicle position relative to a driving lane in case one of the distance sensors fails.

Optionally in some examples, including in at least one preferred example, the processing circuitry is further configured to detect a failed distance sensor among the left distance sensor based on the left distance indicator indicating a failure and the right distance sensor based on the right distance indicator indicating a failure, and determine the position of the vehicle relative to the current driving lane as a distance among the left distance and the right distance from a distance sensor not detected as the failed distance sensor. A technical benefit may include determining distance from a distance sensor that has not failed in the event of a detected failure in the other distance sensor to continue to detect vehicle position and determine lane changes and their completion.

Optionally in some examples, including in at least one preferred example, the processing circuitry is configured to detect the failed distance sensor by being configured to detect the failed distance sensor among the left distance indicator indicating a failure as not being available, and the right distance sensor based on the right distance indicator indicating a failure as not being available. A technical benefit may include different ways to detect distance sensor failure.

Optionally in some examples, including in at least one preferred example, the distance indicator includes a left camera on the vehicle, and the right distance indicator includes a right camera on the vehicle. A technical benefit may include providing redundant cameras as distance sensors.

In this regard, in an example, including in at least one preferred example, a vehicle can include the automatic turn signal cancellation system discussed above.

In this regard, in an example, including in at least one preferred example, a computer-implemented method of automatically canceling a turn signal in a vehicle is disclosed. The method includes, in a processing circuitry, monitoring, by the processing circuitry, a position of the vehicle relative to a current driving lane; detecting, by the processing circuitry, the vehicle entering into a new driving lane adjacent to the current driving lane based on the monitored position of the vehicle; and in response to detecting the vehicle entering into the new driving lane, determining, by the processing circuitry, a vehicle lane change rate indicating a rate of change in position of the vehicle entering into the new driving lane; and canceling, by the processing circuitry, the turn signal based on the vehicle lane change rate of the vehicle entering into the new driving lane.

In this regard, in an example, including in at least one preferred example, a computer program product can include program code for performing, when executed by the processing circuitry, the method discussed above.

In this regard, in an example, including in at least one preferred example, a non-transitory computer-readable storage medium can include instructions, which, when executed by the processing circuitry, cause the processing circuitry to perform the method discussed above.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

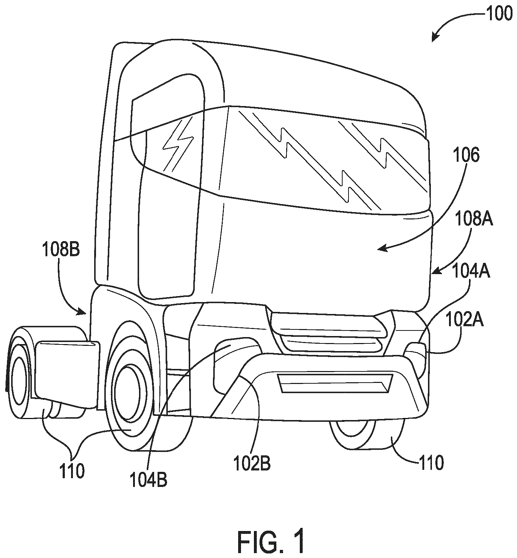

**FIG. 1** is a side perspective view of an exemplary vehicle in the form of a truck that has turn signals configured to be manually activated by a turn signal activator (e.g., a turn signal stalk), and wherein the vehicle also has an automatic turn signal cancellation system configured to automatically cancel a turn signal based on detecting a completed lane change;

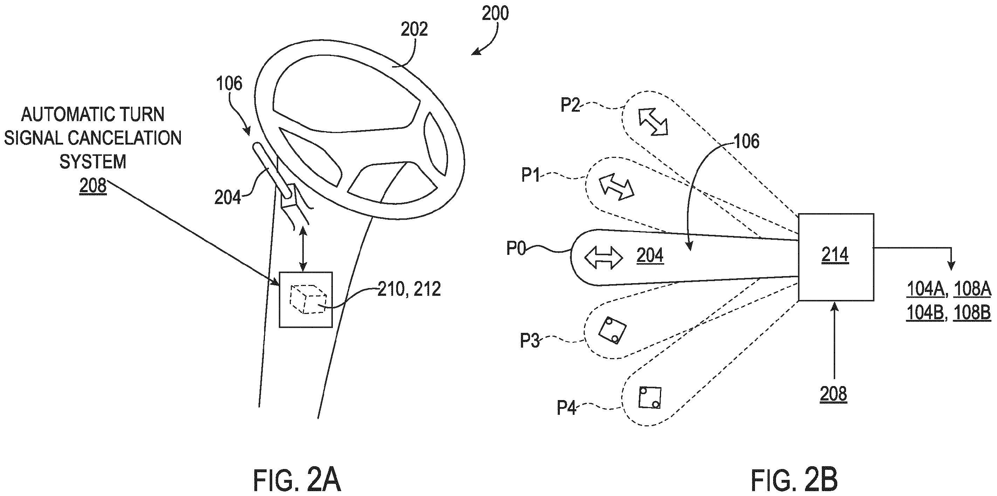

**FIG. 2A** is a side perspective view of an exemplary steering system that can be present in the vehicle in **FIG. 1**, wherein the steering system has a turn signal stalk configured to be activated by a driver for turn signaling;
**FIG. 2B** is a side view of exemplary switch positions of the turn signal stalk in **FIG. 2A**;

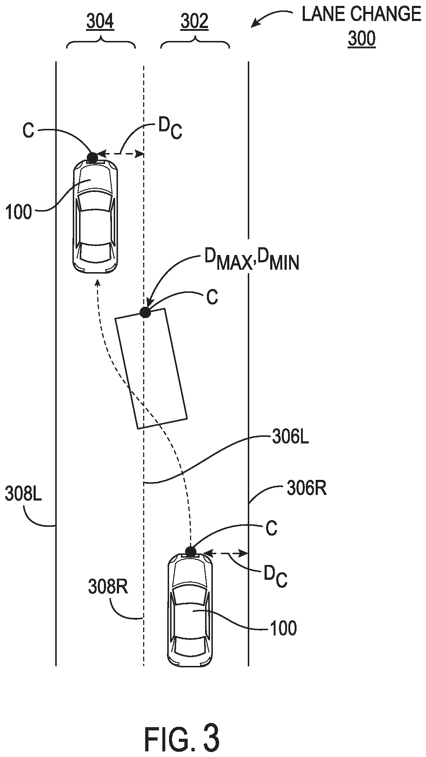

**FIG. 3** is a diagram illustrating an exemplary vehicle highway lane change between driving lanes, wherein the driving lanes are bounded by marker lines;

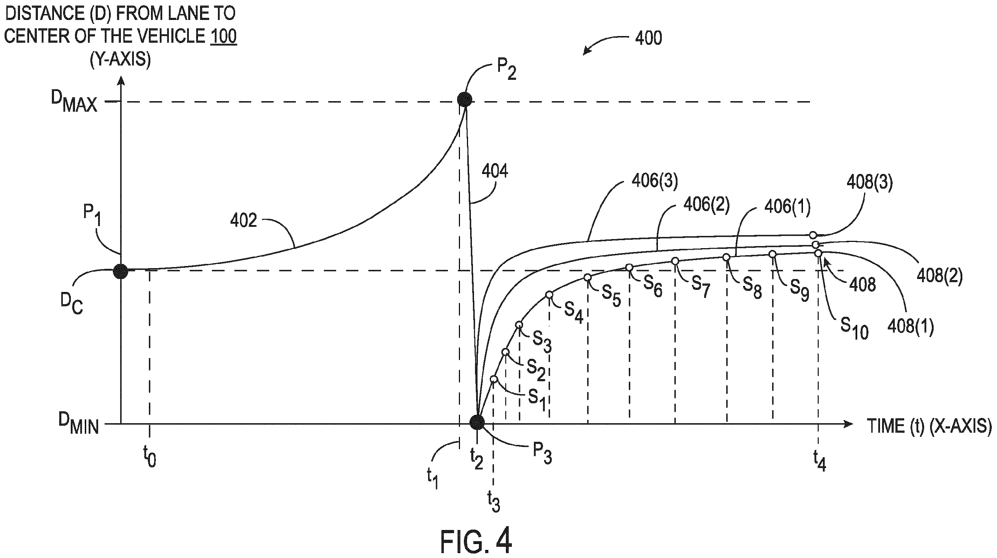

**FIG. 4** is a graph illustrating an exemplary position of a vehicle as a distance between a vehicle and a marker line of a driving lane during a lane change as a function of time for different lane change rates;

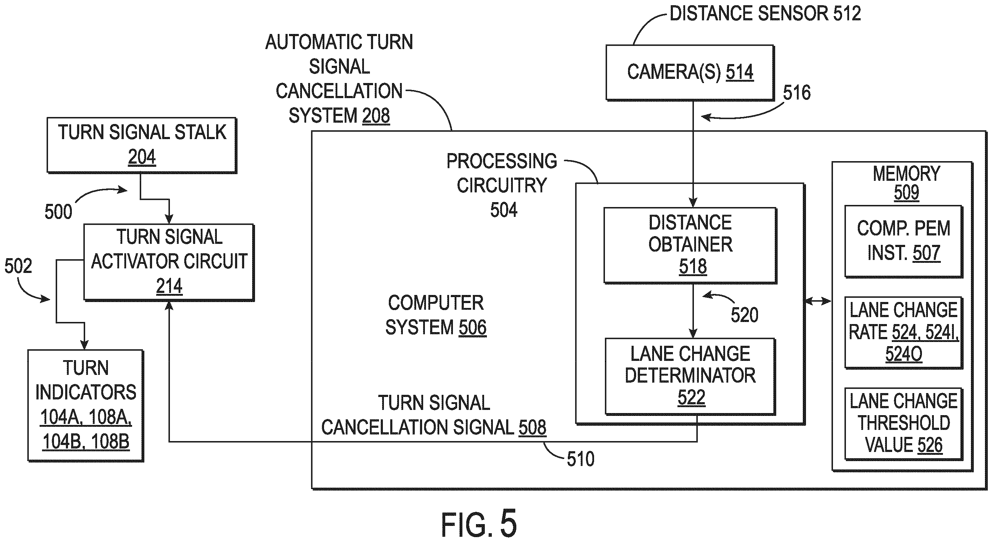

**FIG. 5** is a block diagram of an exemplary automatic turn signal cancellation system that includes a computer system configured to cancel turn signaling for determined completed vehicle lane changes based on monitoring vehicle position relative to a current driving lane to detect a lane change, and monitoring vehicle position relative to a new driving lane to determine lane change rate and completion of the lane change when the lane change rate becomes stable;

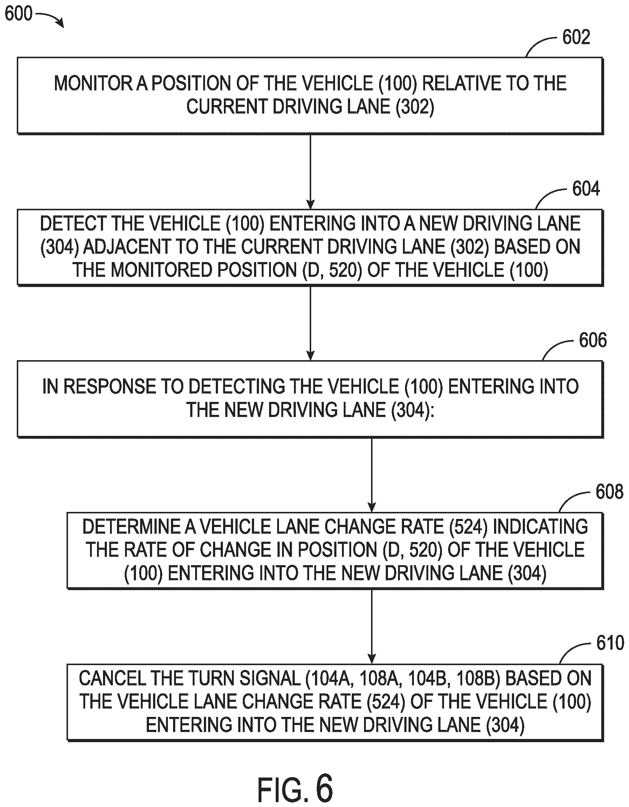

**FIG. 6** is a flowchart illustrating an exemplary process of the processing circuitry in the automatic turn signal cancellation system in **FIG. 5** for canceling turn signaling for a detected completed vehicle lane change based on monitoring vehicle position relative to a current driving lane to detect a lane change, and monitoring vehicle position relative to a new driving lane to determine lane change rate and completion of the lane change when the lane change rate becomes stable;

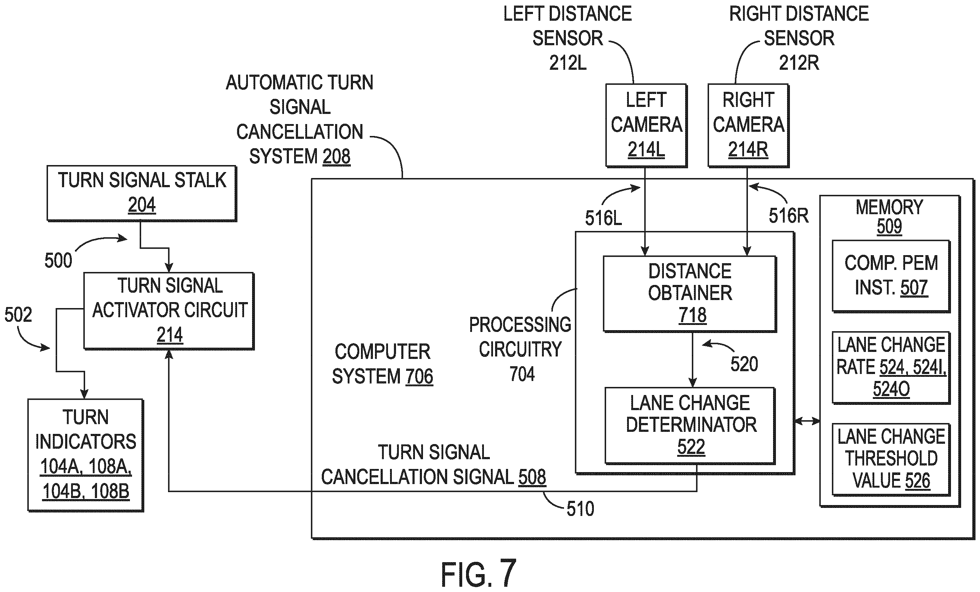

**FIG. 7** is a block diagram of another exemplary automatic turn signal cancellation system that includes a computer system configured to cancel turn signaling for determined completed vehicle lane changes based on monitoring vehicle position relative to both the left and right directions of a current driving lane to detect a lane change, and monitoring vehicle distance relative to both the left and right directions of a new driving lane to determine lane change rate and completion of the lane change when the lane change rate becomes stable;

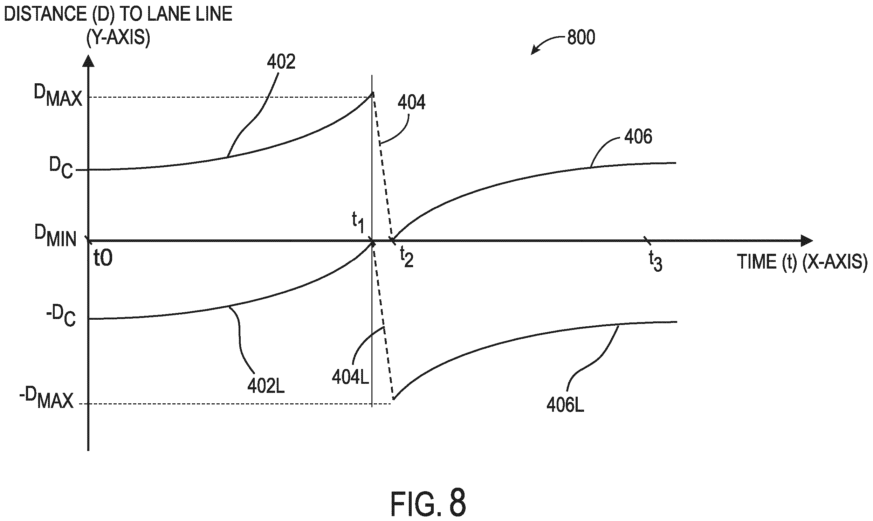

**FIG. 8** is a graph illustrating positions of a vehicle during a lane change from, with reference to driving direction, a current, left driving lane to a new, right driving lane as a function of vehicle position relative to the current and new driving lanes; and

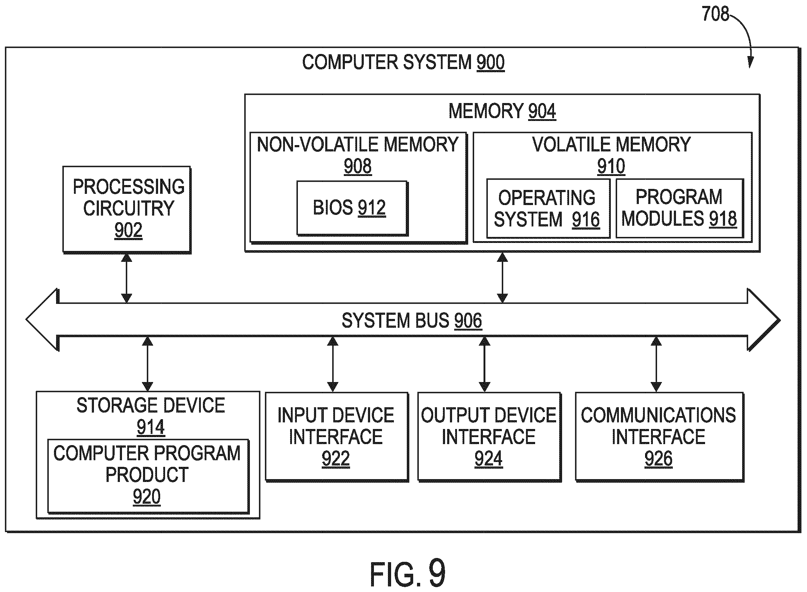

**FIG. 9** is a block diagram of an exemplary computer system that can be included in an automatic turn signal cancellation system, including but not limited to the automatic turn signal cancellation systems in **FIGS. 1**, **2A-2B**, **5** and 7, configured to cancel turn signaling for a detected completed vehicle lane change based on monitoring vehicle position relative to a current driving lane to detect a lane change, and monitoring vehicle position relative to a new driving lane to determine lane change rate and completion of the lane change when the lane change rate becomes stable.

### DETAILED DESCRIPTION

The detailed description set forth below provides information and examples of the disclosed technology with sufficient detail to enable those skilled in the art to practice the disclosure.

Exemplary aspects disclosed herein include automatic turn signal cancellation for vehicle lane changes based on monitored vehicle position in driving lanes. A vehicle is equipped with a turn signal indicator that can be activated by a driver (e.g., by activating a turn signal stalk) to activate turn signaling on the vehicle to provide a visual indication of intention of the driver. The driver can manually cancel a turn signal activation. The vehicle is also equipped with an automatic turn signal cancellation system configured to automatically cancel a previously activated turn signaling in response to detecting a vehicle turn is completed. In exemplary aspects, the automatic turn signal cancellation system includes a computer system that is configured to cancel turn signaling for completed vehicle lane changes (e.g., highway lane changes) based on the rate of change of the vehicle relative to a current and new driving lane (i.e., lane change rate) by monitoring a position of the vehicle relative to the driving lanes. The automatic turn signal cancellation system determines the vehicle lane change rate based on monitoring the position of the vehicle relative to a new driving lane. As the lane change is completed, the lane change rate to the new driving lane will reduce and become more stable, which can be used as an indication that the lane change is completed to in turn cancel turn signaling for the lane change.

Using a monitored vehicle position to detect a vehicle lane change and its completion is more accurate than using steering wheel angle / wheel angle, for example. This is because rate of change of a steering wheel angle / wheel angle is an indirect method of determining change in vehicle position. Also, steering wheel angle / wheel angle also varies significantly for the exact same lane change rate when a vehicle is moving at a faster speed versus a slower speed, thus making it difficult or not possible to accurately correlate angle change to vehicle position and lane change rate. However, monitoring vehicle position relative to a driving lane is a direct way to determine lane change rate. Thus, monitoring vehicle position relative to a driving lane to determine vehicle lane change rate can be used as a direct and more accurate method of detecting vehicle lane change and its completion. Monitoring vehicle position relative to a driving lane to determine lane change rate for detecting vehicle lane change and its completion may also be safer as well as being more accurate.

In this regard, **FIG. 1** is a side perspective view of an exemplary vehicle **100** in the form of a truck that has front head lights **102A, 102B** that include respective front left and front right turn signals **104A, 104B.** The front left and front right turn signals **104A, 104B** are configured to be manually activated by a turn signal activator **106** (e.g., a turn signal stalk) to flash to indicate an intention of the driver to turn the vehicle **100.** The vehicle **100** also has rear left and right turn signals **108A, 108B** located in the rear of the vehicle **100** that are also configured to flash when the turn signal activator **106** is activated. When the turn signal activator **106** is activated for a left turn, the front and rear left turn signals **104A, 108A** are activated to flash. When the turn signal activator **106** is activated for a right turn, the front and rear right turn signals **104B, 108B** are activated to flash. The vehicle **100** may have other turn signals as well. The vehicle **100** also includes wheels **110** with tires that support the vehicle **100** on the road and are linked to axles that are controlled by a steering wheel inside the vehicle **100** for the driver to turn the vehicle in the desired direction.

**FIG. 2A** is a side perspective view of an exemplary steering system **200** that can be in the vehicle **100** in **FIG. 1** that includes a steering wheel **202** that can be controlled by a driver to steer and turn the vehicle **100.** The steering system **200** also includes the turn signal activator **106** in the form of a turn signal stalk **204** in this example for activation of the left turn signals **104A, 108A** or right turn signals **104B, 108B.** However, other forms of a turn signal activator **106**, such as a turn signal button integrated into the steering wheel **20**2, could also be provided. The turn signal stalk **204** in **FIG. 2A** is also shown in **FIG. 2B****.** As shown in **FIG. 2B**, in this example, to activate the left turn signals **104A, 108A,** the turn signal stalk **204** is rotated downward from a **P0** turn neutral position, which is also a turn signal deactivation position, to position **P4.** This causes a turn signal activator circuit **214** (e.g., a circuit) to activate the left turn signals **104A, 108A.** The turn signal activator circuit **214** is configured to sense or receive an indication of the position of the turn signal stalk **204.** Position **P0** of the turn signal stalk **204** is referred to as "stable" or turn neutral position because it is a position in which the turn signal stalk **204** is located by default, in the absence of any action by the driver. On the other hand, all other positions **P1** to **P4** are referred to as "unstable" positions since the turn signal stalk **204** cannot remain locked (alone) in any of these positions. The driver of the vehicle **100** moves the turn signal stalk **204** up when he wishes to turn right and moves the turn signal stalk **204** down when he wishes to turn left. To activate the right turn signals **104B, 108B,** the turn signal stalk **204** is rotated upward to the **P2** position to cause the turn signal activator circuit **214** to activate the right turn signals **104B, 108B.** In this example, to momentarily activate either the left turn signals **104A, 108A,** or right turn signals **104B, 108B,** the turn signal stalk **204** can be moved to the positions **P3** and **P1**, respectively, which are also referred to as "highway positions" to signify lane changes or merging entrances and exits, for example. In positions **P3** and **P1**, the turn signal stalk **204** is configured to automatically return to position **P0** when force is removed from the turn signal stalk **204.** The turn signal activator circuit **214** may be configured to cause the left turn signals **104A, 108A** and right turn signals **104B, 108B** to flash for only a predetermined or programmed limited number of times or duration of time when the turn signal stalk **204** is moved to the respective positions **P3** and **P1.** This is particularly suitable for driving on highways, where changes of direction are generally very short. In this instance, turn signal cancellation is not required. Advantageously, if the driver keeps the turn signal stalk **204** in its first position **P1** or **P3**, i.e., if he does not let the turn signal stalk **204** return to its neutral position **P0**, then the turn signal activator circuit **214** causes the left turn signals **104A, 108A** or right turn signals **104B, 108B** to remain activated until the turn signal stalk **204** returns to its neutral position **P0.**

The angle of movement required to move the turn signal stalk **204** between the neutral position **P0** and the second position **P2** or **P4** is greater than that required to move the turn signal stalk **204** between the neutral position **P0** and the first position **P1** or **P3.** When the turn signal stalk **204** is set to either position **P2** or **P4** in this example, the turn signal stalk **204** could be designed to release back to neutral position **P0** with the respective left turn signals **104A, 108A** or right turn signals **104B, 108B** remaining active under control of the turn signal activator circuit **214** until either cancelled manually by the driver or through an automatic turn signal cancellation system like described below. Alternatively, when the turn signal stalk **204** is set to either position **P2** or **P4,** the turn signal stalk **204** could be designed to remain in these positions and the turn signal activator circuit **214** cause the respective left turn signals **104A, 108A** or right turn signals **104B, 108B** or to remain active until the turn signal stalk **204** is moved out of these positions **P2** or **P4** back to the neutral position **P0** either manually or through an automatic turn signal cancellation system like described below. This type of actuation mode is discussed in U.S. Patent No. 9,041,526 B2, which is incorporated herein by reference in its entirety. Thus, the turn signal activator circuit **214** can cause the left turn signals **104A, 108A or** right turn signals **104B, 108B** or to remain active and continue to flash until either manually canceled or automatically canceled by an automatic turn signal cancellation system. For example, a driver may move the turn signal stalk **204** from position **P2** or **P4** to neutral position **P0,** or the driver may move the turn signal stalk **204** from position **P2** or **P4** all the way to respective positions **P4** or **P2** to signify a right turn then going directly to a left turn, or vice versa. Finally, the turn signal activator circuit **214** causes the left turn signals **104A, 108A** or right turn signals **104B, 108B** to automatically turn off when the driver of the vehicle **100** switches off its ignition, i.e., turns off the engine.

The steering system **200** of the vehicle **100** in **FIG. 2A** also includes an automatic turn signal cancellation system **208** to cause the turn signal activator circuit **214** to automatically deactivate the vehicle's **100** left turn signals **104A, 108A** or right turn signals **104B, 108B** at the end of a turn. The automatic turn signal cancellation system **208** could be part of the vehicle's **100** Electronic Control Unit (ECU). In this example, as shown in **FIG. 2A**, the automatic turn signal cancellation system **208** could include a steering wheel sensor **210** in the form of a steering wheel angle sensor **212** (also referred to as a steering angle sensor (SAS)) configured to measure the rotation of the steering wheel **202**, and in particular the angle of the steering wheel **202** with respect to a turn neutral position in which the vehicle wheels **110** are generally straight. The steering wheel angle sensor **212** can measure the degree of rotation of the steering wheel **202** in relation to a turn neutral position. Of course, any other sensor or method can be used to determine the degree of rotation of the steering wheel in radiant/degrees. Typically, steering wheel angle information can be accessed from the power steering system data of the vehicle **100.** The angle of the steering wheel **202** is a relative angle which can therefore be positive or negative depending on the direction of rotation from a turn neutral position. Typically, when talking about the steering wheel **202** angle in relation to a turn neutral position (wheels straight), the steering wheel **202** angle will be positive when turning the steering wheel **202** to the left and negative when turning the steering wheel **202** to the right (polar coordinates). The same applies to the average angle of the vehicle's front wheels **110.** When turning left, the angle of rotation of the wheels **110** is considered positive, while when turning right, it will be negative. This automatic turn signal cancellation system **208** could be configured to control the turn signal activator circuit **214** to control the activation and deactivation of the left turn signals **104A, 108A** or right turn signals **104B, 108B** according to the driver's maneuvers on the turn signal stalk **204** and the vehicle's **100** driving conditions.

It may be difficult for the automatic turn signal cancellation system **208** to distinguish between a normal turn and a lane change for controlling the cancellation of turn signals **104A, 108A** or **104B, 108B.** **FIG. 3** is a diagram illustrating an exemplary vehicle lane change **300** (e.g., a highway lane change) by the vehicle **100** between a first, current driving lane **302** and an adjacent second driving lane **304** that becomes the new driving lane **304** of the vehicle **100** after the lane change. In this example, the first driving lane **302** is bounded by respective left-side and right-side lane marker lines **306L, 306R.** The second driving lane **304** is bounded by respective left-side and right-side lane marker lines **308L, 308R,** wherein right-side lane marker line **308R** is a dashed lane marker line that is common with the left-side lane marker line **306L** of the first driving lane **302.** At higher speeds of the vehicle 100, the steering wheel **202** angle may not change as significantly for the vehicle lane change **300** as in a normal turn or highway exit. Thus, it may be difficult for an automatic turn signal cancellation, like the automatic turn signal cancellation system **208** in **FIG. 2A****,** to detect the difference between a normal turn and a lane change based on a smaller steering wheel angle change that typically occurs in a high speed lane change, such as a highway lane change. However, it is still desired for an automatic turn signal cancellation system, including the automatic turn signal cancellation system **208** in **FIG. 2A****,** to support automatic turn signal cancellation in response to a driver activating a turn signal for a lane change and then completing the lane change.

It has been observed that the rate of change of the vehicle moving from a current driving lane (e.g., like the first driving lane **302** in **FIG. 3**) to new driving lane (e.g., like the second driving lane **304** in **FIG. 3**) (i.e., lane change rate) can be used as an indication of a lane change occurring as well as when the lane change is completed or substantially completed. This is because in a vehicle lane change, the vehicle changes position relative to a driving lane as function of time. However as the lane change is completed, this change in position relative to a driving lane becomes stable or substantially stable (vehicle position relative to a driving lane as function of time has zero or little change). This can used to detect a vehicle lane change as well as detecting that such lane change is completed to in turn cancel turn signaling for the lane change. Using a monitored vehicle position to detect a vehicle lane change and its completion based on lane change rate is more accurate than using a steering wheel angle or wheel angle of a vehicle, for example. This is because rate of change of a steering wheel angle / wheel angle is an indirect method of determining change in vehicle position. Also, steering wheel angle / wheel angle also varies significantly for the exact same lane change rate when the vehicle is moving at a faster speed versus a slower speed, thus making it difficult or not possible to accurately correlate angle change to vehicle position and lane change rate. However, monitoring vehicle position relative to a driving lane is a direct way to determine lane change rate. Thus, monitoring vehicle position relative to a driving lane to determine vehicle lane change rate can be used as a direct and more accurate method of detecting vehicle lane change and its completion. Monitoring vehicle position relative to a driving lane to determine lane change rate for detecting vehicle lane change and its completion may also be safer as well as being more accurate.

In this regard, **FIG. 4** is a graph **400** illustrating how a monitored vehicle position relative to a driving lane can be used to determine vehicle lane change rate, which in turn can be used to detect a vehicle lane change and its completion, to in turn automatically cancel turn signaling for the lane change. The graph **400** in **FIG. 4** is discussed with regard to the vehicle lane change **300** of the vehicle **100** in **FIG. 3** as a left-side lane change from the first driving lane **302** to the second driving lane **304.** As shown in **FIG. 4**, an exemplary vehicle **100** position is represented as a distance (D) between the vehicle **100** and a right-side lane marker line of a driving lane during a lane change (Y-axis) as a function of time **t** (X-axis) for different lane change rates. For example, the distance (D) of the vehicle **100** could be the distance from a monitored center position **C** of the vehicle **100** relative to an immediately adjacent right-side lane marker line of a driving lane of the vehicle **100**, such as right-side lane marker line **306R** of the driving lane **302** in **FIG. 3****.** The graph **400** in **FIG. 4** is further described with regard to the vehicle **100** being initially in the first driving lane **302** in **FIG. 3** as a current driving lane, and then the vehicle **100** performing a lane change from the current driving lane **302** to the second driving lane **304**, as a new driving lane.

In this regard, as shown in **FIG. 4**, at time **t0**, the distance **D** of a center monitored position **C** of the vehicle **100** to the right-side lane marker line **306R** of the first driving lane **302** is centered at center distance **Dc** at shown as sample point **P1.** However, as the vehicle **100** starts to move from the first driving lane **302** to the adjacent, second driving lane **304**, which may be an indication of the start of a lane change, the distance **D** of the center monitored position **C** of the vehicle **100** to the right-side lane marker line **306R** starts to increase as shown in distance curve **402.** As shown in **FIGS. 3** and **4**, eventually, if the vehicle **100** lane change continues to occur, right before the center **C** monitored position of the vehicle **100** crosses over the left-side lane marker line **306L** of the first driving lane **302**, the distance **D** of the center monitored position **C** of the vehicle **100** to the right-side lane marker line **306R** will be at the maximum distance **Dmax** from the right-side marker line **306R** shown by the second sample point **P2** at time **t1** in **FIG. 4****.** Once the center monitored position **C** of the vehicle **100** crosses over the left-side lane marker line **306L**, the left-side lane marker line **306L** effectively becomes the right-side lane marker line **308R** that is monitored relative to the vehicle **100** moving into the second driving lane **304.** Thus, as shown in **FIG. 4**, the distance **D** of the center monitored position **C** of the vehicle **100** to the right-side lane marker line **308R** shifts abruptly, essentially also at time **t1**, to a minimum distance **Dmin** from the right-side lane marker line **308R** at sample point **P3** as shown by distance curve **404.**

Then, as the vehicle **100** continues to move fully into the second driving lane **304** as part of a lane change, the distance **D** of the center monitored position **C** of the vehicle **100** to the right-side lane marker line **308R** of the second driving lane **304** starts to increase as shown in distance curves **406(1)-406(3)** signifying a continual moving of the vehicle **100** into the second driving lane **304.** Distance curve **406(1)** represents a first scenario of a slower speed lane change as the distance **D** between the center monitored position **C** of the vehicle **100** to the right-side lane marker line **308R** has a smaller increase in distance **D** over time **t** (smaller slope). For example, as shown in **FIG. 4**, the distance **D** of the center monitored position **C** of the vehicle **100** to the right-side lane marker line **308R** of the second driving lane **304** for the distance curve **406(1)** is tracked by sampling the distance **D** at difference sample times **S1-S10** over time **t.** Distance curve **406(2)** represents a second scenario of an intermediate speed lane change as the distance **D** between the center monitored position **C** of the vehicle **100** to the right-side lane marker line **308R** has a greater increase in distance **D** over time **t** (larger slope) than distance curve **406(1).** Distance curve **406(3)** represents a third scenario of a faster speed lane change as the distance **D** between the center monitored position **C** of the vehicle **100** to the right-side lane marker line **308R** has an even greater increase in distance **D** over time **t** (even larger slope) than distance curve **406(2).** The distance curves **406(1)-406(3)** can also be determined based on sampling distance **D** at difference sample points **S1-S10.** Eventually in each of the slower, intermediate, and faster speed lane change represented by respective distance curves **406(1)-406(3)**, the change in distance **D** will become stable or substantially stable (close to or zero change in distance **D** over time **t**) as shown at respective sample points **408(1)-408(3).** This is an indication that the vehicle's **100** lane change rate to the new driving lane as the second driving lane **304** in this example is completed, which can in turn be used as an indication to cancel an activated turn signaling for the lane change.

Note that if the vehicle **100** were performing an opposite direction lane change to a right side driving lane, the distance curves **402, 404, 406(1)-406(3)** in **FIG. 4** would be opposite values about the center distance **Dc** line, but the meanings would be the same as described above for detecting a lane change and the vehicle lane change rate to determine completion of the lane change.

Thus, an automatic turn signal cancellation system, such as the automatic turn signal cancellation system **208** in **FIG. 2A** for vehicle **100**, can be configured to monitor vehicle position relative to a driving lane to detect a vehicle lane change and to determine the completion of the vehicle lane change based on vehicle lane change rate. Such monitoring of vehicle position can be used to detect the start of a potential lane change, the occurrence of the lane change and the lane change rate, and the completion of the lane change based on the stabilization of the lane change rate, to in turn automatically cancel turn signaling. As discussed above, this is a direct and more accurate method of detecting lane change and its completion than using a monitored steering wheel angle / wheel angle, especially for highway lane changes that may involve a smaller amount of change in steering wheel angle / wheel angle. Once a monitored vehicle lane change results in a vehicle lane change rate that is low enough to indicate a sufficient stability of the lane change rate, this can be used as an indication that a vehicle lane change has been completed. If a vehicle thereafter performs another new lane change, the start of the new lane change can be detected based on the vehicle position relative to the current driving lane, and the vehicle lane change rate monitored to determine the vehicle lane change and its completion in the same manner.

In this regard, **FIG. 5** is a block diagram illustrating more exemplary detail of the automatic turn signal cancellation system **208** in **FIG. 2A****.** The turn signal stalk **204** is configured to generate a turn signal indicator signal **500** to the turn signal activator circuit **214** based on the position of the turn signal stalk **204** to cause the turn signal activator circuit **214** to generate turn signal control signals **502** to activate the turn signals **104A, 108A** or **104B, 108B** according to the position of the turn signal stalk **204**, as discussed previously. The automatic turn signal cancellation system **208** includes processing circuitry **504** (e.g., a circuit, microprocessor, microcontroller, field programmable gate array (FPGA)) that can be part of a computer system **506** (e.g., a central processing unit (CPU), a graphics processing unit (GPU), a system-on-a-chip (SoC)). The processing circuitry **504** is configured to execute computer program instructions **507** in a memory **509** in this example to cause a circuit(s) to perform a particular action, such as generate signals. As discussed in more detail below, the automatic turn signal cancellation system **208** and its processing circuitry **504** is configured to generate a turn signal cancellation signal **508** on a signal line **510** to the turn signal activator circuit **214** to cause the turn signal activator circuit **214** to cancel turn signaling for determined completed vehicle lane changes. As discussed in detail below, the processing circuitry **504** is configured to determine that turn signaling should be canceled based on monitoring vehicle position of its associated vehicle relative to a current driving lane to detect a lane change, and then monitoring vehicle position relative to a new driving lane to determine lane change rate and completion of the lane change when the lane change rate becomes stable.

With continuing reference to **FIG. 5**, the automatic turn signal cancellation system **208** is further configured to operate in conjunction with a distance sensor **512.** The distance sensor **512** may or may not form part of the automatic turn signal cancellation system **208.** The distance sensor **512** may be in the form of one or more cameras **514** arranged at the front center of the vehicle **100** and associated image analysis software and/or hardware configured to extract distance information from the captured images. Preferably, if the distance sensor **512** is provided as one or more cameras **514**, the camera(s) **514** have a field view covering both left and right sides of the area in front of the vehicle **100** such that lane marker lines of a current driving lane (e.g., in **FIG. 3**, lane marker lines **306L, 306R** for driving lane **302**; lane marker lines **308L, 308R** for driving lane **304**) are within the field view of the camera(s) **514.** The distance sensor **512** is configured to generate a distance indicator **516** indicating sensed information that can be correlated to distance between the vehicle **100** and a lane marker line in its current driving lane. The distance indicator **516** is based on the distance sensor **512** being located or configured to measure distance of a designated area of the vehicle **100** to an indicator, such as a lane marker line. For example, if the distance sensor **512** is located in the center of a long axis (from front to back) of the vehicle **100**, the designated area of the vehicle 100 is the long axis center of the vehicle **100.**

In this example, the processing circuitry **504** of the automatic turn signal cancellation system **208** includes a distance obtainer **518** that receives the distance indicator **516** from the distance sensor **512.** The distance obtainer **518** can be a circuit(s) in the processing circuitry **504** that does not involve execution of program instructions and/or can be a software module or process involving computer program instructions executed on circuitry in the processing circuitry **504**, as examples. The distance obtainer **518** can be a software process or module that is configured to execute software instructions on circuitry in the processing circuitry **504.** Based on the received distance indicator **516**, the distance obtainer **518** is configured to obtain a distance from the vehicle **100** to a lane marker line arranged immediately to the right of the vehicle **100** in its current driving lane in this example (e.g., in **FIG. 3**, lane marker line **306R** if the vehicle **100** is in driving lane **302**; lane marker line **308R** if the vehicle **100** is in driving lane **304**). Before any vehicle lane change, the distance obtainer **518** is configured to obtain the distance (e.g., distance **D** in **FIGS. 3** and **4**) from the vehicle **100** to a lane marker line arranged immediately to the right of the vehicle **100** in its current driving lane. Once a lane marker line in the current driving lane of the vehicle **100** is crossed (i.e., after the lane change), the distance obtainer **518** is configured to obtain the distance from the vehicle **100** to a lane marker line arranged immediately to the right of the vehicle **100** in its new driving lane. The distance obtainer **518** is configured to provide distance data **520** (e.g., distance **D** in **FIGS. 3** and **4**) indicating the determined distance of the vehicle **100** to a lane marker line arranged immediately to the right of the vehicle **100** in its current driving lane in this example to a lane change determinator **522** as part of the processing circuitry **504.** The lane change determinator **522** can be a circuit(s)_in the processing circuitry **504** that does not involve execution of program instructions and/or can be a software module or process involving computer program instructions executed on circuitry in the processing circuitry **504**, as examples. Based on the received distance data **520**, the lane change determinator **522** is programmed to determine that a vehicle lane change is performed. Upon such determination, which will be further explained in more detail below, the lane change determinator **522** is configured to generate the turn signal cancellation signal **508** to the turn signal activator circuit **214** to request that turn signaling be canceled. As discussed above, the turn signal activator circuit **214** is configured to cause any activated turn signals **104A, 108A** or **104B, 108B** to be canceled in response to receiving the turn signal cancellation signal **508.**

**FIG. 6** is a flowchart illustrating an exemplary process **600** of the processing circuitry **504** in the automatic turn signal cancellation system **208** in **FIG. 5** canceling turn signaling for a detected completed vehicle lane change based on monitoring vehicle position relative to a current driving lane to detect a lane change, and monitoring vehicle position relative to a new driving lane to determine lane change rate and completion of the lane change when the lane change rate becomes stable. The process **600** in **FIG. 6** is described with regard to the vehicle **100** changing lanes from the driving lane **302** in **FIG. 3** as a current driving lane to the second driving lane **304** in **FIG. 3** as the new driving lane based on the first distance **406(1)** in **FIG. 4** signifying a slower lane change. The process **600** in **FIG. 6** is also described in reference to the graph **400** in **FIG. 4** used to show the processing circuitry's **504** in **FIG. 5** monitored position of the vehicle **100** relative to a current driving lane based on distance data **520** generated by the distance obtainer **518** of the processing circuitry **504** that can be used to determine the lane change rate **524** of the vehicle **100.** The lane change rate **524** can be stored by the processing circuitry **504** and/or the lane change determinator **522** in memory **509.** This determined lane change rate **524** of the vehicle **100** can be used by the lane change determinator **522** to detect a vehicle lane change of the vehicle **100** from the first driving lane **302** to the second driving lane **304** (**FIG. 3**) and its completion, to in turn generate the turn signal cancellation signal **508** (**FIG. 5**) to automatically cancel turn signaling for the vehicle lane change.

In this regard, as shown in **FIG. 6**, the processing circuitry **504** monitors a position in the form of distance of the vehicle **100** relative to the current driving lane (block **602** in **FIG. 6****).** This is before any vehicle lane change occurs. Using **FIGS. 3** and **4** as an example, assuming the vehicle **100** starts in current driving lane **302**, the processing circuitry **504** monitors the position of the vehicle **100** based on the distance data **520** provided by the distance obtainer **518** in **FIG. 5** indicating the distance **D** of the vehicle **100** relative to the right-side lane marker line **306R** in the current driving lane **302** as indicated at time **t0** in **FIG. 4****.** In this example, the distance data **520** indicating the distance **D** of the vehicle **100** relative to the right-side lane marker line **306R** in the current driving lane **302** is a distance from the center of the vehicle **100**, shown as **Dc** in **FIG. 4** at sample point **P1** at time **t0.**

With continuing reference to **FIG. 6**, the processing circuitry **504** then detects the vehicle **100** entering into a new driving lane as adjacent to a current driving lane based on the monitored position of the vehicle **100** (block **604** in **FIG. 6b** For example, using **FIGS. 3** and **4** as an example, the lane change determinator **522** detects the vehicle **100** entering into a second driving lane **304** as the new driving lane based on the monitored distance data **520** indicating the distance of the vehicle **100** relative to the right-side lane marker line **306R.** Referencing **FIG. 4** as an example, right before the center **C** monitored position of the vehicle **100** as a designated area of the vehicle **100** crosses over the left-side lane marker line **306L** of the first driving lane **302**, the distance **D** of the center monitored position **C** of the vehicle **100** to the right-side lane marker line **306R** will be at the maximum distance **Dmax** from the right-side lane marker line **306R** shown by the second sample point **P2** at time **t1** in **FIG. 4****.** Then, once the center monitored position **C** of the vehicle **100** based on the distance data **520** crosses over the left-side lane marker line **306L,** the left-side lane marker line **306L** effectively becomes the right-side lane marker line **308R** that is monitored relative to the vehicle **100** moving into the second driving lane **304.** Thus, as shown in **FIG. 4**, the distance **D** of the center monitored position **C** of the vehicle **100** to the right-side lane marker line **308R** shifts abruptly, essentially at time **t2**, from a minimum distance **Dmin** to the right-side lane marker line **308R** as shown by distance curve **404.** This transition of the distance data **520** from the maximum distance **Dmax** from a right lane marker to the minimum distance **Dmin** from a right lane marker in this example can be used by the lane change determinator **522** to detect the vehicle **100** entering into the new driving lane (e.g., driving lane **304** in **FIG. 3**) as a result of a vehicle lane change.

With continuing reference to **FIG. 6**, in response to the processing circuitry **504** detecting the vehicle **100** entering into the new driving lane (e.g., from driving lane **302** to driving lane **304** in **FIG. 3**) (block **606** in **FIG. 6**), the processing circuitry **504** is configured to determine a vehicle lane change rate **524** indicating the rate of change of position of the vehicle **100** entering into the new driving lane, which can be used to determine lane change completion (block **608** in **FIG. 6**). For example, using **FIGS. 3** and **4** as an example, the processing circuitry **504** determines the vehicle lane change rate **524** of the vehicle **100** entering into the second driving lane **304** as the new driving lane by determining the vehicle lane change rate **524** based on the monitored distance data **520** over time. As shown in distance curve **406(1)** in **FIG. 4****,** as the vehicle **100** continues to move fully into the second driving lane **304** as part of a lane change, the distance data **520** as distance **D** of the center monitored position **C** of the vehicle **100** to the right-side lane marker line **308R** of the second driving lane **304** starts to increase, signifying a continual moving of the vehicle **100** into the second driving lane **304.** The vehicle lane change rate **524** of the vehicle **100** into the second driving lane **304** is based on determining the rate of change of the distance data **520** as distance **D** between the vehicle **100** and the right-side lane marker line **308R** of the second driving lane **304.** This is also shown by the slope of distance curve **406(1)** in **FIG. 4** in this example.

Eventually the change in distance **D** of the vehicle **100** to the right-side lane marker line **308R** of the new driving lane **302**, based on the distance data **520**, will become stable or substantially stable (close to or zero change in distance **D** over time **t**) as shown at respective sample points **408(1)** for distance curve **406(1)** at time **t3**, in this example. For example, the lane change determinator **522** can be configured to compare the determined lane change rate **524** of the vehicle **100** to a defined lane change rate threshold **526** in a memory (see **FIG. 5**), which may be predefined to indicate a stability point where the vehicle **100** is deemed to no longer be performing a lane change. The lane change rate threshold **526** may be programmable and can be stored by the processing circuitry **504** and/or the lane change determinator **522** in memory **509.** The lane change rate threshold **526** is an indication that the vehicle's **100** lane change rate **524** to the second driving lane **304** as the new driving lane is completed, which can in turn be used by the lane change determinator **522** to generate the turn signal cancellation signal **508** in **FIG. 5** to cancel an activated turn signal **104A, 108A** or **104B, 108B** for the lane change (block **610** in **FIG. 6**)**.** In this example, the turn signaling that was activated by the driver of the vehicle **100** that would be canceled would likely be the left turn signals **104A, 108A** due to a lane change in the left direction to the new driving lane **304.** The processing circuitry **504** and its lane change determinator **522** is configured to not generate the turn signal cancellation signal **508** to request the turn signal activator circuit **214** to cancel any activated turn signals **104A, 108A** or **104B, 108B** as long as the vehicle lane change rate **524** continues to vary, signifying the vehicle's **100** position is not stable enough to indicate an established new driving lane. As discussed above, this could be based on the processing circuitry **504** and its lane change determinator **522** determining the lane change rate **524** has not fallen below the lane change rate threshold **526.**

What constitutes a vehicle lane change rate of the vehicle **100** becoming stable may be relative to the initial vehicle lane change rate, because a higher lane change rate will result in completion of a lane change faster than a lower lane change rate. In this regard, as discussed in more detail below, the automatic turn signal cancellation system **208** in **FIGS. 2A** and 5 and its processing circuitry **504** can also be configured to determine an initial lane change rate **524I** based on monitoring the position of the vehicle **100** after beginning a lane change to a new driving lane as part of block **608** in the process **600** in **FIG. 6** for example. The initial lane change rate **524I** is the vehicle lane change rate immediately following the detection of the vehicle **100** entering into a new driving lane (e.g., at sample point **P3** in **FIG. 4**) over a first, designated period of time thereafter. For example, the lane change determinator **522** of the processing circuitry **504** could be configured to determine the initial lane change rate **524I** over a period of 500 milliseconds (ms) following the detection of the vehicle **100** entering into a new driving lane (e.g., entering driving lane **304** in **FIG. 3** after sample point **P2** in **FIG. 4**). The initial lane change rate can be based on sampling the distance data **520** at different and/or periodic times after detecting the vehicle **100** entering the new driving lane (e.g., between time **t1** and sample **S1** in **FIG. 4** for example), and the change in the distance data **520** over those different samples during a first, designated time period. The initial lane change rate **524I** is an indication of how aggressive the lane change starts to occur. The lane change determinator **522** of the processing circuitry **504** can then be configured to set the vehicle lane change threshold **526** used to determine when the lane change has been completed based on the determined initial lane change rate **524I.** For example, a higher threshold value can be used for the lane change rate threshold **526** for a higher determined initial lane change **524I** rate, because a higher initial lane change rate **524I** indicates a more aggressive, faster lane change that may then reach stability faster as the lane change is completed, as shown in distance curve **406(3)** in **FIG. 4** as an example. A lower threshold value can be used for the lane change rate threshold **526** for a lower determined initial lane change rate **524I,** because a lower initial lane change rate indicates a less aggressive, slower lane change that may then reach stability slower as the lane change is completed, as shown in distance curve **406(1)** in **FIG. 4** as an example. There is a positive correlation between the initial vehicle lane change rate and the lane change rate threshold **526.**

In this regard, after the initial lane change rate **524I** is determined, the automatic turn signal cancellation system **208** and its processing circuitry **504** can then be configured to continue to sample the distance data **520** thereafter, after the first time period, to determine the continued lane change rate **524C** of the vehicle **100** over a second time period (e.g., after sample time **S1** in **FIG. 4**). The continued lane change rate **524C** is based on the difference in distance **D** of the vehicle **100** based on the distance data **520** between adjacent sample points (e.g., **S2 to S3, S3** to **S4,** ... , **S9** to **S10** in **FIG. 4**) over time. The continued lane change rate **524C** of the vehicle **100** can be based on the lane change determinator **522** sampling the distance data **520** at different times after the first time period in which the initial lane change rate **524I** is determined (e.g., at sample times **S5-S10** in **FIG. 4**), and the change in the distance data **520** over those different samples. If the continued vehicle lane change rate **524C** is greater than the initial lane change rate threshold **526** during a given sampling period (e.g., every 500 milliseconds (ms)), this means the vehicle's **100** position relative to a new driving lane has not yet become stable and thus the lane change to a new driving lane (e.g., driving lane **304** in **FIG. 3**) is not yet completed, and turn signaling is not yet canceled. However, if the continued vehicle lane change rate **524C** becomes less than the initial lane change rate threshold **526** during a given sampling period, this means the vehicle's **100** position relative to the new driving lane (e.g., driving lane **304** in **FIG. 3**) has become stable and thus the lane change to the new driving lane is completed or substantially completed, and turn signaling is canceled by generating the turn signal cancellation signal **508** in **FIG. 5****.**

For example, the processing circuitry **504** may be configured to set the lane change rate threshold **526** to 0.4 based on a determined initial vehicle lane change rate **524I** being greater than 0.6. The processing circuitry **504** may be configured to set the lane change rate threshold **526** to 0.2 based on the determined initial vehicle lane change rate **524I** being between 0.4 and 0.6. The processing circuitry **504** may be configured to set the lane change rate threshold **526** to 0.1 based on the determined initial vehicle lane change rate **524I** being less than 0.4.

It may also be desired to equip a vehicle, such as vehicle **100** in **FIG. 1****,** with multiple distance sensors, like the distance sensor **512** in **FIG. 5** for example, to detect the position of a vehicle relative to both a lane marker line for the driving lane on both left side and right side of the vehicle. A lane change can be detected using detection of vehicle position from either the left or right lane marker line in the driving lane, as distance change of a vehicle relative to a fixed left- and right-side lane marker line in a driving lane will oppositely change linearly. However, an automatic turn signal cancellation system can be configured to use the distance from the closest lane marker line to the vehicle based on the left and right side distance sensors for greater accuracy. The ability to provide left and right side distance sensors to detect left side and right side distances of the vehicle to its driving lane also provides redundancy in case of failure of one of the distance sensors.

In this regard, **FIG. 7** is a block diagram of another exemplary automatic turn signal cancellation system **708** that is similar to the automatic turn signal cancellation system **508** in **FIG. 5****.** The automatic turn signal cancellation system **708** includes processing circuitry **704** (e.g., a circuit, microprocessor, microcontroller, field programmable gate array (FPGA)) that can be part of a computer system **706** (e.g., a central processing unit (CPU), a graphics processing unit (GPU), a system-on-a-chip (SoC)). The automatic turn signal cancellation system **708** in **FIG. 7** includes a distance obtainer **718** as part of the processing circuitry **704**, similar to the distance obtainer **518** in **FIG. 5****.** The distance obtainer **718** can be a circuit(s) in the processing circuitry **704** that does not involve execution of program instructions and/or can be a software module or process involving computer program instructions executed on circuitry in the processing circuitry **704**, as examples. However, in this example, the distance obtainer **718** is configured to receive a separate left distance indicator **516L** from a left distance sensor **212L** (e.g., a left camera **214L**) positioned on the vehicle **100** to detect a left distance from a designated area of the vehicle **100** to a left-side lane marker line of a driving lane and right distance indicator **516R** from a right distance sensor **212R** (e.g., a right camera **214R**) positioned on the vehicle **100** to detect a right distance from a designated area of the vehicle **100** to a right-side lane marker line of a driving lane. In this manner, the automatic turn signal cancellation system **708** is configured to receive a redundant position of the vehicle **100** relative to both a left-side and right-side lane marker line of a driving lane for redundancy. For example, the distance of a center of the vehicle **100** relative to a left-side lane marker line of a driving lane mirrors the distance of the center of the vehicle **100** relative to a left-side lane marker line. The distance obtainer **718** can provide the distance data **520** to the processing circuitry **504** as described above in **FIG. 5**, based on the selected right and left distance indicator **516R, 516L** to detect a vehicle lane change and its completion.

For example, **FIG. 8** is a graph **800** illustrating positions of a vehicle **100** like shown in **FIG. 4** with common elements shown by common labels. The distance **D** between the vehicle **100** and a right-side lane marker line of a driving lane provided by right distance indicator **516R** is shown by distance curves **402, 404, and 406** like in **FIG. 4****.** The graph **800** also shows distance curves **402L, 404L, 406L** indicating the distance **D** between the vehicle **100** and a left-side lane marker line for the driving lane, which mirror the distance **D** between the vehicle **100** and a right-side lane marker line above the center distance **Dc** indicated by a negative distance of the distance **D** between the vehicle **100** and a left-side lane marker line.

Also note that if the vehicle **100** were performing an opposite direction lane change to a right side driving lane, the distance curves **402, 404, 406(1)-406(3)** in **FIG. 4** would be opposite values about the center distance **Dc** line, but the meanings would be the same as described above for detecting a lane change and the vehicle lane change rate to determine completion of the lane change.

In this example, if either the left distance sensor **212L** or right distance sensor **212R** incurs a failure, the distance obtainer **718** can be configured to select the right and left distance indicator **516R, 516L** from the respective right or left distance sensor **212R, 212L** that did not fail as a way to determine the position and distance of the vehicle **100** to a lane marker line for detecting a lane change and its completion, as described above. In this manner, redundancy is provided to receive a distance indictor indicative of distance of the vehicle **100** to a lane marker line in the event that the right or left distance sensor **212R, 212L** fails. For example, the distance obtainer **718** be configured to determine the right or left distance sensor **212R, 212L** failed based on their respective right and left distance indicator **516R, 516L** not being available or their data being valid (e.g., in error or corrupted). If valid left and right distance indicators **516L, 516R** are received by the distance obtainer **718b** meaning that neither the right or left distance sensor **212R, 212L** failed, the distance obtainer **718** can be configured to use whichever left and right distance indicators **516L, 516R** are desired. For example, the distance obtainer **518** can be configured to use the left or right distance indicator **516L, 516R** that indicates a distance closest to a respective left-side or right-side lane marker line for greater accuracy.

**FIG. 9** is a block diagram of an exemplary computer system **900** that can be included in an automatic turn signal cancellation system, including but not limited to the automatic turn signal cancellation systems **208, 708** in **FIGS. 2A-2B**, **5**, and 7, configured to cancel turn signaling for a detected completed vehicle lane change based on monitoring vehicle position relative to a current driving lane to detect a lane change, and monitoring vehicle position relative to a new driving lane to determine lane change rate and completion of the lane change when the lane change rate becomes stable.

The computer system **900** is adapted to execute instructions from a computer-readable medium to perform these and/or any of the functions or processing described herein. The computer system **900** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **900** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), automatic turn signal cancellation system, processor device, processing circuitry, etc., includes reference to one or more such devices to individually or j ointly execute a set (or multiple sets) of instructions to perform any one or more of the methodologies discussed herein. For example, a control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **900** may comprise at least one computing device or electronic device capable of including firmware, hardware, and/or executing software instructions to implement the functionality described herein. The computer system **900** may include processing circuitry **902** (e.g., processing circuitry including one or more processor devices or control units) that could be the processing circuitry **504, 704** in the automatic turn signal cancellation systems **208** in **FIG. 2A-2B** and **5,** and **7.** The computer system **900** also includes a memory **904** (that could store the computer program instructions **507** in **FIGS. 5** and **7**) and a system bus **906.** The computer system **900** may include at least one computing device having the processing circuitry **902.** The system bus **906** provides an interface for system components including, but not limited to, the memory **904** and the processing circuitry **902.** The processing circuitry **902** may include any number of hardware components for conducting data or signal processing or for executing computer code stored in memory **904,** including the computer program instructions **507** executed by the processing circuitry **504, 704** in the automatic turn signal cancellation systems **208, 708** in **FIGS. 2A-2B**, **5**, and 7. The processing circuitry **902** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **902** may further include computer executable code that controls operation of the programmable device.

The system bus **906** may be any of several types of bus structures that may further interconnect to a memory bus (with or without a memory controller), a peripheral bus, and/or a local bus using any of a variety of bus architectures. The memory **904** may be one or more devices for storing data and/or computer code for completing or facilitating methods described herein. The memory **904** may include database components, object code components, script components, or other types of information structure for supporting the various activities herein. Any distributed or local memory device may be utilized with the systems and methods of this description. The memory **904** may be communicably connected to the processing circuitry **902** (e.g., via a circuit or any other wired, wireless, or network connection) and may include computer code for executing one or more processes described herein. The memory **904** may include non-volatile memory **908** (e.g., read-only memory (ROM), erasable programmable read-only memory (EPROM), electrically erasable programmable read-only memory (EEPROM), etc.), and volatile memory **910** (e.g., random-access memory (RAM)), or any other medium which can be used to carry or store desired program code in the form of machine-executable instructions or data structures and which can be accessed by a computer or other machine with processing circuitry **902.** A basic input/output system (BIOS) **912** may be stored in the non-volatile memory **908** and can include the basic routines that help to transfer information between elements within the computer system **900.**

The computer system **900** may further include or be coupled to a non-transitory computer-readable storage medium such as the storage device **914**, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **914** and other drives associated with computer-readable media and computer-usable media may provide non-volatile storage of data, data structures, computer-executable instructions (e.g., computer program instructions **507**), and the like.

Computer-code which is hard or soft coded may be provided in the form of one or more modules. The module(s) can be implemented as software and/or hard-coded in circuitry to implement the functionality described herein in whole or in part. The modules may be stored in the storage device **914** and/or in the volatile memory **910**, which may include an operating system **916** and/or one or more program modules **918.** All or a portion of the examples disclosed herein may be implemented as a computer program **920** stored on a transitory or non-transitory computer-usable or computer-readable storage medium (e.g., single medium or multiple media), such as the storage device **914**, which includes complex programming instructions (e.g., complex computer-readable program code) to cause the processing circuitry **902** to carry out actions described herein. Thus, the computer-readable program code of the computer program **920** can comprise software instructions (e.g., computer program instructions **507**) for implementing the functionality of the examples described herein when executed by the processing circuitry **902.** In some examples, the storage device **914** may be a computer program product (e.g., readable storage medium) storing the computer program **920** thereon, where at least a portion of a computer program **920** may be loadable (e.g., into a processor) for implementing the functionality of the examples described herein when executed by the processing circuitry **902.** The processing circuitry **902** may serve as a controller or control system for the computer system **900** that is to implement the functionality described herein.

The computer system **900** may include an input device interface **922** configured to receive input and selections to be communicated to the computer system **900** when executing instructions, such as from a keyboard, mouse, touch-sensitive surface, etc. Such input devices may be connected to the processing circuitry **902** through the input device interface **922** coupled to the system bus **906** but can be connected through other interfaces, such as a parallel port, an Institute of Electrical and Electronic Engineers (IEEE) 1394 serial port, a Universal Serial Bus (USB) port, an IR interface, and the like. The computer system **900** may include an output device interface **924** configured to forward output, such as to a display, a video display unit (e.g., a liquid crystal display (LCD) or a cathode ray tube (CRT)). The computer system **900** may include a communications interface **926** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Implementation examples are described in the following numbered clauses:
Example 1: An automatic turn signal cancellation system comprising processing circuitry configured to, in response to activation of a turn signal in a vehicle in a current driving lane:
   monitor a position of the vehicle relative to the current driving lane;
   detect the vehicle entering into a new driving lane adjacent to the current driving lane based on the monitored position of the vehicle; and
   in response to detecting the vehicle entering into the new driving lane:
      determine a vehicle lane change rate indicating a rate of change in position of the vehicle entering into the new driving lane; and
      cancel the turn signal based on the vehicle lane change rate of the vehicle entering into the new driving lane.
Example 2: The automatic turn signal cancellation system of Example 1, wherein the processing circuitry is configured to cancel the turn signal by being configured to:
   cancel the turn signal based on the vehicle lane change rate of the vehicle entering into the new driving lane being below a lane change rate threshold.
Example 3: The automatic turn signal cancellation system of Example 2, wherein the processing circuitry is further configured to, in response to detecting the vehicle entering into the new driving lane:
   not cancel the turn signal based on the vehicle lane change rate of the vehicle entering into the new driving lane being above the lane change rate threshold.
Example 4: The automatic turn signal cancellation system of any one of Examples 1-3, wherein the processing circuitry is configured to detect the vehicle entering into the new driving lane by being configured to:
   detect a designated area of the vehicle crossing a lane marker between the current driving lane and the new driving lane based on the monitored position of the vehicle.
Example 5: The automatic turn signal cancellation system of Example 4, wherein the processing circuitry is configured to detect the designated area of the vehicle crossing the lane marker between the current driving lane and the new driving lane by being configured to:
   determine a distance between the designated area of the vehicle and the lane marker based on the monitored position of the vehicle; and
   detect a change between a maximum distance between the designated area of the vehicle and the lane marker and a minimum distance between the designated area of the vehicle and the lane marker.
Example 6: The automatic turn signal cancellation system of any one of Examples 4-5, wherein the designated area of the vehicle comprises a center of the vehicle.
Example 7: The automatic turn signal cancellation system of Example 2, wherein in response to detecting the vehicle entering into the new driving lane, the processing circuitry is further configured to:
   determine an initial vehicle lane change rate of the vehicle entering into the new driving lane over a first time period after detecting the vehicle entering the new driving lane; and
   set the lane change rate threshold based on the determined initial vehicle lane change rate.
Example 8: The automatic turn signal cancellation system of Example 7, wherein:
   the processing circuitry is further configured to, in response to detecting the vehicle entering into the new driving lane:
      sample a plurality of second positions of the vehicle relative to the new driving lane over the first time period; and
   the processing circuity is configured to determine the initial vehicle lane change rate by being configured to:
      determine the initial vehicle lane change rate of the vehicle entering into the new driving lane based on the sampled plurality of second positions of the vehicle over the first time period.
Example 9: The automatic turn signal cancellation system of Example 8, wherein the processing circuitry is configured to:
   sample the plurality of second positions of the vehicle relative to the new driving lane over the first time period by being configured to:
      sample a plurality of second distances of the vehicle to a lane marker between the current driving lane and the new driving lane over the first time period; and
   determine the initial vehicle lane change rate of the vehicle by being configured to:
      determine the initial vehicle lane change rate of the vehicle entering into the new driving lane based on a change in the sampled plurality of second distances of the vehicle over the first time period.
Example 10: The automatic turn signal cancellation system of Example 9, wherein the processing circuitry is configured to:
   set the lane change rate threshold to 0.4 based on the determined initial vehicle lane change rate being greater than 0.6.
Example 11: The automatic turn signal cancellation system of Example 9, wherein the processing circuitry is configured to:
   set the lane change rate threshold to 0.2 based on the determined initial vehicle lane change rate being between 0.4 and 0.6.
Example 12: The automatic turn signal cancellation system of Example 9, wherein the processing circuitry is configured to:
   set the lane change rate threshold to 0.1 based on the determined initial vehicle lane change rate being less than 0.4.
Example 13: The automatic turn signal cancellation system of Example 7, wherein the processing circuitry is configured to determine the vehicle lane change rate of the vehicle entering into the new driving lane by being configured to:
   sample a plurality of third positions of the vehicle relative to the new driving lane over a second time period following the first time period; and
   determine the vehicle lane change rate of the vehicle entering into the new driving lane based on the sampled plurality of third positions of the vehicle over the second time period.
Example 14: The automatic turn signal cancellation system of Example 13, wherein the processing circuitry is configured to cancel the turn signal by being configured to:
   cancel the turn signal based on the vehicle lane change rate of the vehicle entering into the new driving lane being below the lane change rate threshold.
Example 15: The automatic turn signal cancellation system of any one of Examples 7 or 13-14, wherein the processing circuitry is configured to set the lane change rate threshold in a positive correlation to the initial vehicle lane change rate.
Example 16: The automatic turn signal cancellation system of Example 15, wherein the first time period is 500 milliseconds (ms).
Example 17: The automatic turn signal cancellation system of any one of Examples 1-16, wherein the processing circuitry is further configured to:
   receive a distance indicator from a distance sensor on the vehicle indicative of distance of a designated area of the vehicle relative to a lane marker line of a driving lane of the vehicle; and
   monitor the position of the vehicle relative to the current driving lane by being configured to:
      determine the position as a distance of the designated area of the vehicle relative to the current driving lane based on the distance indicator from the distance sensor.
Example 18: The automatic turn signal cancellation system of Example 17, wherein the distance sensor is comprised of a camera mounted to the vehicle.
Example 19: The automatic turn signal cancellation system of Example 17, wherein the processing circuitry is further configured to:
   receive a distance indicator from a left distance sensor on the vehicle indicative of distance of the vehicle relative to a left-side lane marker line of a driving lane of the vehicle;
   receive a right distance indicator from a right distance sensor on the vehicle indicative of distance of the vehicle relative to a right-side lane marker line of the driving lane of the vehicle; and
   monitor the position of the vehicle relative to the current driving lane by being configured to:
      determine a left distance of the designated area of the vehicle relative to the left-side lane marker line of the current driving lane based on the left distance indicator from the left distance sensor;
      determine a right distance of the designated area of the vehicle relative to a right-side lane marker line of the current driving lane based on the right distance indicator from the right distance sensor; and
      determine the position of the vehicle relative to the current driving lane as the closest distance among the left distance and the right distance.
Example 20: The automatic turn signal cancellation system of Example 19, wherein the processing circuitry is further configured to:
   detect a failed distance sensor among the left distance sensor based on the left distance indicator indicating a failure and the right distance sensor based on the right distance indicator indicating a failure; and
   determine the position of the vehicle relative to the current driving lane as a distance among the left distance and the right distance from a distance sensor not detected as the failed distance sensor.
Example 21: The automatic turn signal cancellation system of Example 20, wherein the processing circuitry is configured to detect the failed distance sensor by being configured to:
   detect the failed distance sensor among the left distance indicator indicating a failure as not being available, and the right distance sensor based on the right distance indicator indicating a failure as not being available.
Example 22: The automatic turn signal cancellation system of any one of Examples 19-21, wherein:
   the left distance indicator comprises a left camera on the vehicle; and
   the right distance indicator comprises a right camera on the vehicle.
Example 23: A vehicle comprising the automatic turn signal cancellation system of any one of Examples 1-22.
Example 24: A computer-implemented method of automatically canceling a turn signal in a vehicle, comprising, in a processing circuitry:
   monitoring, by the processing circuitry, a position of the vehicle relative to a current driving lane;
   detecting, by the processing circuitry, the vehicle entering into a new driving lane adjacent to the current driving lane based on the monitored position of the vehicle; and
   in response to detecting the vehicle entering into the new driving lane:
      determining, by the processing circuitry, a vehicle lane change rate indicating a rate of change in position of the vehicle entering into the new driving lane; and
      canceling, by the processing circuitry, the turn signal based on the vehicle lane change rate of the vehicle entering into the new driving lane.
Example 25: A computer program product comprising program code for performing, when executed by the processing circuitry, the method of Example 24.
Example 26: A non-transitory computer-readable storage medium comprising instructions, which, when executed by the processing circuitry, cause the processing circuitry to perform the method of Example 24.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An automatic turn signal cancellation system (208; 508; 708) comprising processing circuitry (504; 704) configured to, in response to activation of a turn signal (104A, 108A; 104B, 108B) in a vehicle (100) in a current driving lane (302):
monitor a position of the vehicle relative to the current driving lane (302);
detect the vehicle entering into a new driving lane (304) adjacent to the current driving lane (302) based on the monitored position of the vehicle; and
in response to detecting the vehicle entering into the new driving lane:
determine a vehicle lane change rate (524) indicating a rate of change in position of the vehicle entering into the new driving lane; and
cancel the turn signal (104A, 108A; 104B, 108B) based on the vehicle lane change rate (524) of the vehicle entering into the new driving lane (304).

2. The automatic turn signal cancellation system of claim 1, wherein the processing circuitry (504; 704) is configured to cancel the turn signal (104A, 108A; 104B, 108B) by being configured to:
cancel the turn signal based on the vehicle lane change rate (524) of the vehicle entering into the new driving lane being below a lane change rate threshold (526).

3. The automatic turn signal cancellation system of any one of claim 1-2, wherein the processing circuitry (504; 704) is configured to detect the vehicle entering into the new driving lane by being configured to:
detect a designated area of the vehicle crossing a lane marker between the current driving lane (302) and the new driving lane (304) based on the monitored position of the vehicle.

4. The automatic turn signal cancellation system of claim 3, wherein the processing circuitry (504; 704) is configured to detect the designated area of the vehicle crossing the lane marker between the current driving lane and the new driving lane by being configured to:
determine a distance between the designated area of the vehicle and the lane marker based on the monitored position of the vehicle; and
detect a change between a maximum distance between the designated area of the vehicle and the lane marker and a minimum distance between the designated area of the vehicle and the lane marker.

5. The automatic turn signal cancellation system of claim 2, wherein in response to detecting the vehicle entering into the new driving lane, the processing circuitry (504; 704) is further configured to:
determine an initial vehicle lane change rate (524I) of the vehicle entering into the new driving lane over a first time period after detecting the vehicle entering the new driving lane; and
set the lane change rate threshold (526) based on the determined initial vehicle lane change rate (524I).

6. The automatic turn signal cancellation system of claim 5, wherein:
the processing circuitry (504; 704) is further configured to, in response to detecting the vehicle (100) entering into the new driving lane:
sample a plurality of second positions of the vehicle relative to the new driving lane over the first time period; and
the processing circuity (504; 704) is configured to determine the initial vehicle lane change rate by being configured to:
determine the initial vehicle lane change rate (524I) of the vehicle entering into the new driving lane based on the sampled plurality of second positions of the vehicle over the first time period.

7. The automatic turn signal cancellation system of claim 5, wherein the processing circuitry (504; 704) is configured to determine the vehicle lane change rate of the vehicle entering into the new driving lane by being configured to:
sample a plurality of third positions of the vehicle relative to the new driving lane over a second time period following the first time period; and
determine the vehicle lane change rate of the vehicle entering into the new driving lane based on the sampled plurality of third positions of the vehicle over the second time period.

8. The automatic turn signal cancellation system of claim 7, wherein the processing circuitry (504; 704) is configured to cancel the turn signal by being configured to:
cancel the turn signal based on the vehicle lane change rate of the vehicle entering into the new driving lane being below the lane change rate threshold.

9. The automatic turn signal cancellation system of any preceding claims, wherein the processing circuitry (504; 704) is further configured to:
receive a distance indicator from a distance sensor on the vehicle indicative of distance of a designated area of the vehicle relative to a lane marker line of a driving lane of the vehicle; and
monitor the position of the vehicle relative to the current driving lane by being configured to:
determine the position as a distance of the designated area of the vehicle relative to the current driving lane based on the distance indicator from the distance sensor.

10. The automatic turn signal cancellation system of claim 9, wherein the processing circuitry (504; 704) is further configured to:
receive a distance indicator from a left distance sensor (212L) on the vehicle indicative of distance of the vehicle relative to a left-side lane marker line of a driving lane of the vehicle;
receive a right distance indicator from a right distance sensor (212R) on the vehicle indicative of distance of the vehicle relative to a right-side lane marker line of the driving lane of the vehicle; and
monitor the position of the vehicle relative to the current driving lane by being configured to:
determine a left distance of the designated area of the vehicle relative to the left-side lane marker line of the current driving lane based on the left distance indicator from the left distance sensor;
determine a right distance of the designated area of the vehicle relative to a right-side lane marker line of the current driving lane based on the right distance indicator from the right distance sensor; and
determine the position of the vehicle relative to the current driving lane as the closest distance among the left distance and the right distance.

11. The automatic turn signal cancellation system of claim 10, wherein the processing circuitry (504; 704) is further configured to:
detect a failed distance sensor among the left distance sensor based on the left distance indicator indicating a failure and the right distance sensor based on the right distance indicator indicating a failure; and
determine the position of the vehicle relative to the current driving lane as a distance among the left distance and the right distance from a distance sensor not detected as the failed distance sensor.

12. A vehicle (100) comprising the automatic turn signal cancellation system of any of claims 1-11.

13. A computer-implemented method of automatically canceling a turn signal in a vehicle, comprising, in a processing circuitry:
monitoring (602), by the processing circuitry, a position of the vehicle (100) relative to a current driving lane (302);
detecting (604), by the processing circuitry, the vehicle entering into a new driving lane (404) adjacent to the current driving lane (302) based on the monitored position (D, 520) of the vehicle; and
in response (606) to detecting the vehicle entering into the new driving lane:
determining (608), by the processing circuitry, a vehicle lane change rate (524) indicating a rate of change in position (D, 520) of the vehicle entering into the new driving lane; and
canceling (610), by the processing circuitry, the turn signal based on the vehicle lane change rate of the vehicle entering into the new driving lane.

14. A computer program product comprising program code for performing, when executed by the processing circuitry, the method of claim 13.

15. A non-transitory computer-readable storage medium comprising instructions, which, when executed by the processing circuitry, cause the processing circuitry to perform the method of claim 13.
